# EUROPÄISCHE PATENTANMELDUNG

(11) **EP 4 621 371 A1**
(43) Veröffentlichungstag der Anmeldung: **24.09.2025**
(21) Anmeldenummer: 24165405.2
(22) Anmeldetag: 22.03.2024
(51) Int. Cl.: G01L 9/00, G01L 9/08, G01L 23/10, G01L 23/22

(54) **LADUNGSVERSTÄRKEREINRICHTUNG UND MESSKETTE MIT SOLCH EINER LADUNGSVERSTÄRKEREINRICHTUNG**

(71) Anmelder: Kistler Holding AG, 8408 Winterthur (CH)
(72) Erfinder: Keitzel, Gunnar, 8442 Hettlingen (CH)

(57) **Zusammenfassung**

Ladungsverstärkereinrichtung für mindestens einen piezoelektrischen Sensor, welcher unter der Wirkung einer zu messenden physikalischen Messgrösse elektrische Ladungen erzeugt, welcher mit einem Sensorkabel mit der Ladungsverstärkereinrichtung elektrisch verbindbar ist; welche Ladungsverstärkereinrichtung ein Gehäuse aufweist, in welchem mindestens eine Ladungsverstärkereinheit, eine elektrische Spannungsversorgungseinheit, eine Steuereinheit und eine drahtlose Kommunikationseinheit angeordnet sind; wobei der piezoelektrische Sensor im mit der Ladungsverstärkereinrichtung elektrisch verbundenen Zustand über das Sensorkabel elektrische Ladungen an die Ladungsverstärkereinheit ableitet; welche Ladungsverstärkereinheit dazu eingerichtet ist, abgeleitete elektrische Ladungen in eine elektrische Spannung zu verstärken; wobei die Ladungsverstärkereinheit einen Operationsverstärker und mindestens einen Kondensator aufweist; wobei der Operationsverstärker einen invertierenden Eingang und einen Signalausgang aufweist; wobei der invertierende Eingang einen elektrischen Eingangswiderstand aufweist; wobei der Kondensator parallel zum invertierenden Eingang und zum Signalausgang geschaltet ist; wobei der Kondensator eine Kapazität und einen elektrischen Isolationswiderstand aufweist; und wobei die Ladungsverstärkereinheit eine Zeitkonstante von grösser/gleich 10³ s, vorzugsweise grösser/gleich 5*10³ s aufweist.

## Beschreibung

### Technisches Gebiet

Die Erfindung betrifft eine Ladungsverstärkereinrichtung nach dem Oberbegriff des ersten unabhängigen Anspruchs. Die Erfindung betrifft auch eine Messkette mit solch einer Ladungsverstärkereinrichtung nach dem Oberbetriff des zwölften unabhängigen Anspruchs.

### Stand der Technik

Piezoelektrische Sensoren werden zur Messung von vielfältigen physikalischen Messgrössen wie Kraft, Moment, Druck, Beschleunigung, usw. eingesetzt. Dazu weist der Sensor piezoelektrisches Material auf, das unter der Wirkung einer physikalischen Messgrösse elektrische Ladungen erzeugt. Die elektrischen Ladungen werden von Elektroden abgegriffen und sind die Messgrösse des Sensors. Für eine typische Empfindlichkeit eines Sensors nach dem longitudinalen Piezoeffekt von 4 pCN⁻¹ (Picocoulomb pro Newton) bewirkt eine Kraft von 10 kN (Kilonewton) eine Ladungsmenge von 40 nC (Nanocoulomb). Um eine solch kleine Ladungsmenge weitgehend verlustfrei zu erfassen, wird ein Ladungsverstärker verwendet. Der Ladungsverstärker ist ein Gleichstromverstärker mit hoher innerer Spannungsverstärkung. Er weist einen Operationsverstärker mit einem invertierenden Eingang mit möglichst hohem elektrischen Eingangswiderstand auf, welcher mit einem Kondensator rückgekoppelt ist. Für einen Kondensator mit einer elektrischen Kapazität von 10 nF (Nanofarad) liefert der Ladungsverstärker als Messsignal eine Gleichspannung von 4 V (Volt).

Die Schrift EP1338879A1 zeigt einen solchen Ladungsverstärker für einen piezoelektrischen Drucksensor zur Messung des Zylinderdrucks in einem Verbrennungsmotor eines Kraftfahrzeugs. Der Ladungsverstärker ist im Gehäuse einer Steuerungseinheit des Verbrennungsmotors angeordnet. Die elektrischen Ladungen werden über ein Kabel vom piezoelektrischen Drucksensor zum Ladungsverstärker elektrisch abgeleitet. An einem Ausgang des Ladungsverstärkers ist eine elektrische Gleichspannung als Messsignal abgreifbar und über ein weiteres Kabel zu einer Auswerteeinheit elektrisch ableitbar. Die elektrischen Betriebsspannung erhält der Ladungsverstärker von einer Batterie des Kraftfahrzeugs. Auch für die elektrische Betriebsspannung ist ein Kabel von der Batterie bis zur Steuereinheit verlegt.

Nun ist es ein allgemeiner Wunsch beim industriellen Einsatz von piezoelektrischen Sensoren, möglichst kurze oder gar keine Kabel zu verwenden. Denn bei der spanenden Bearbeitung, beim Spritzguss oder auch in der Robotik befinden sich die piezoelektrischen Sensoren zur Messung der physikalischen Messgrössen sehr nahe an Werkzeugen oder Roboterarmen. Dort herrschen jedoch zum einen stark eingeschränkte Platzverhältnisse, was die Verlegung von Kabeln erschweren oder verunmöglichen kann, und zum anderen sind die Kabel dort Späne, Kühlschmierstoffen, hohen Temperaturen und bewegten Gegenständen ausgesetzt, was zur vorzeitigen Alterung und Beschädigung der Kabel führen kann.

Auch werden oft mehrere Komponenten der physikalischen Messgrösse gleichzeitig gemessen. Dazu werden entweder mehrere Einkomponentensensoren oder ein Mehrkomponentensensor verwendet, wofür dann wiederum mehrere Einkanalkabel oder ein Mehrkanalkabel mit einer Ader für jede Komponente benötigt wird, was die Anzahl oder den Durchmesser der Kabel vergrössert und das Verlegen der Kabel zusätzlich erschweren oder verunmöglichen kann.

Zudem ist ein Bedürfnis der Industrie, piezoelektrische Sensoren auch für quasistatische Anwendungen wie Langzeitüberwachungen an Motoren, Kraft- und Gewichtsmessungen in Prüfständen, usw. einzusetzen. Aufgrund der nur endlich hohen Isolationswiderstände der Messkette bis zum Ladungsverstärker sind Leckströme jedoch unvermeidlich. Auch weist der Operationsverstärker eine herstellbedingte Eingangs-Offset-Spannung auf. Das Zusammenwirken der Leckströme mit der Eingangs-Offset-Spannung verfälschen die Messung der physikalischen Messgrösse. Diese Verfälschungen sind insbesondere bei kleinen Messbereichen ausgeprägt, wo die Verfälschungen oft nur eine Grössenordnung kleiner als der obere Endwert (Full Scale) sind. Deshalb ist die Zeitdauer einer quasistatischen Messung der physikalischen Messgrösse mit piezoelektrischen Sensoren für kleine Messbereiche auf kleiner/gleich 10 s (Sekunden) beschränkt.

Eine erste Aufgabe der vorliegenden Erfindung ist es, den Ladungsverstärker der Schrift EP1338879A1 weiterzuentwickeln, bei der möglichst kurze oder gar keine Kabel benötigt werden. Eine zweite Aufgabe der Erfindung besteht darin, einen Ladungsverstärker bereitstellen, welcher eine quasistatische Messung der physikalischen Messgrösse mit hoher Genauigkeit ermöglicht. Schliesslich besteht eine dritte Aufgabe der Erfindung darin, eine Messkette mit solch einem Ladungsverstärker bereitzustellen.

### Darstellung der Erfindung

Die ersten beiden Aufgaben werden durch die Merkmale des ersten unabhängigen Anspruches gelöst.

Die Erfindung betrifft eine Ladungsverstärkereinrichtung für mindestens einen piezoelektrischen Sensor, welcher unter der Wirkung einer zu messenden physikalischen Messgrösse elektrische Ladungen erzeugt, und welcher über ein Sensorkabel mit der Ladungsverstärkereinrichtung elektrisch verbindbar ist; welche Ladungsverstärkereinrichtung ein Gehäuse aufweist, in welchem mindestens eine Ladungsverstärkereinheit, eine Steuereinheit, eine elektrische Spannungsversorgungseinheit und eine drahtlose Kommunikationseinheit angeordnet sind; wobei der piezoelektrische Sensor im mit der Ladungsverstärkereinrichtung elektrisch verbundenen Zustand über das Sensorkabel elektrische Ladungen an die Ladungsverstärkereinheit ableitet; welche Ladungsverstärkereinheit dazu eingerichtet ist, abgeleitete elektrische Ladungen in eine elektrische Spannung zu verstärken; wobei die Ladungsverstärkereinheit einen Operationsverstärker und mindestens einen Kondensator aufweist; welcher Operationsverstärker einen invertierenden Eingang und einen Signalausgang aufweist, welcher invertierende Eingang einen elektrischen Eingangswiderstand aufweist, welcher Kondensator parallel zum invertierenden Eingang und zum Signalausgang geschaltet ist, welcher Kondensator eine Kapazität und einen elektrischen Isolationswiderstand aufweist; und wobei die Ladungsverstärkereinheit eine Zeitkonstante von grösser/gleich 10³ s, vorzugsweise grösser/gleich 5*10³ s aufweist.

Die erfindungsgemässe Ladungsverstärkereinrichtung ist weitgehend autark. Der Begriff "autark" wird im Sinne von "sich selbst genügend" ausgelegt. Zur Gewährleistung der Autarkie weist die Ladungsverstärkereinrichtung ein eigenständiges Gehäuse auf, dessen Inneres vor schädlichen Umwelteinflüssen geschützt ist. Dies ist ein erster Unterschied zur Schrift EP1338879A1, wo die Ladungsverstärkereinheit im Gehäuse der Steuerungseinheit eines Verbrennungsmotors angeordnet ist. Somit lässt sich die Ladungsverstärkereinrichtung am Messort des piezoelektrischen Sensors anordnen und die Ableitung der elektrischen Ladungen bis zur Ladungsverstärkereinrichtung erfolgt so über ein möglichst kurzes Sensorkabel.

Im weiteren Unterschied zur Schrift EP1338879A1 befinden sich im Gehäuse auch eine elektrische Spannungsversorgungseinheit, eine Steuereinheit und eine drahtlose Kommunikationseinheit. Durch die elektrische Spannungsversorgungseinheit wird im Einsatz der Ladungsverstärkereinrichtung kein Kabel bis zur Ladungsverstärkereinrichtung für eine elektrische Betriebsspannung benötigt. Die Steuereinheit wandelt die verstärkte elektrische Spannung in digitale Messdaten, welche von der drahtlosen Kommunikationseinheit dann kabellos zu einer räumlich beabstandeten Auswerteeinrichtung übermittelt werden.

Die dritte Aufgabe wird durch die Merkmale des zweiten unabhängigen Anspruches gelöst.

Die Erfindung betrifft auch eine Messkette, welche mindestens einen piezoelektrischen Sensor, ein Sensorkabel, eine Ladungsverstärkereinrichtung und eine Auswerteeinrichtung aufweist; wobei der piezoelektrische Sensor, das Sensorkabel und die Ladungsverstärkereinrichtung an einem Messort angeordnet sind; welcher piezoelektrische Sensor unter der Wirkung einer zu messenden physikalischen Messgrösse elektrische Ladungen erzeugt und über das Sensorkabel mit der Ladungsverstärkereinrichtung elektrisch verbunden ist und über das Sensorkabel elektrische Ladungen an die Ladungsverstärkereinrichtung ableitet; welche Ladungsverstärkereinrichtung ein Gehäuse aufweist, in welchem eine Ladungsverstärkereinheit, eine Steuereinheit, eine elektrische Spannungsversorgungseinheit und eine drahtlose Kommunikationseinheit angeordnet sind; welche Ladungsverstärkereinheit dazu eingerichtet ist, abgeleitete elektrische Ladungen in eine elektrische Spannung zu verstärken; welche Steuereinheit dazu eingerichtet ist, die verstärkte elektrische Spannung in Messdaten zu wandeln; welche Ladungsverstärkereinheit einen Operationsverstärker und mindestens einen Kondensator aufweist, welcher Operationsverstärker einen invertierenden Eingang und einen Signalausgang aufweist; welcher invertierende Eingang einen elektrischen Eingangswiderstand aufweist; welcher Kondensator parallel zum invertierenden Eingang und zum Signalausgang geschaltet ist; welcher Kondensator eine Kapazität und einen elektrischen Isolationswiderstand aufweist; wobei die Ladungsverstärkereinheit eine Zeitkonstante von grösser/gleich 10³ s, vorzugsweise grösser/gleich 5*10³ s aufweist; wobei die Auswerteeinrichtung an einem Auswerteort angeordnet ist; wobei der Auswerteort in einer räumlichen Beabstandung zum Messort liegt; wobei die Auswerteeinrichtung eine weitere drahtlose Kommunikationseinheit aufweist; und wobei die drahtlose Kommunikationseinheit und die weitere drahtlose Kommunikationseinheit dazu eingerichtet sind, die drahtlose Datenübertragung der Messdaten über die räumliche Beabstandung hinweg durchzuführen.

Die erfindungsgemässe Messkette kommt mit einem möglichst kurzen Sensorkabel zwischen dem piezoelektrischen Sensor und der Ladungsverstärkereinrichtung aus. Die Ladungsverstärkereinrichtung ist autark, im Inneren ihres Gehäuses weist sie eine Ladungsverstärkereinheit, eine Steuereinheit, eine elektrische Spannungsversorgungseinheit und eine drahtlose Kommunikationseinheit auf. Durch die elektrische Spannungsversorgungseinheit wird im Einsatz der Messkette kein Kabel bis zur Ladungsverstärkereinrichtung für eine elektrische Betriebsspannung benötigt. Für die Datenübertragung der Messdaten zwischen der Ladungsverstärkereinrichtung und der räumlich beabstandeten Auswerteeinrichtung wird im Einsatz der Messkette dann auch kein Kabel mehr benötigt.

Die Anordnung der autarken Ladungsverstärkereinrichtung am Messort und des daraus resultierenden kurzen Sensorkabels für die Ableitung der elektrischen Ladungen in Kombination mit der Zeitkonstante von grösser/gleich 10³ s am invertierenden Eingang und am Kondensator der Ladungsverstärkereinheit ermöglicht die quasistatische Messung der physikalischen Messgrösse. Denn je kürzer das Sensorkabel ist, desto kleiner sind die Leckströme im Sensorkabel. Der Messfehler der Messkette bis zur Ladungsverstärkereinrichtung stammt dann im Wesentlichen von Leckströmen am invertierenden Eingang und am Kondensator der Ladungsverstärkereinheit in Zusammenwirkung mit einer herstellbedingten Eingangs-Offset-Spannung des Operationsverstärkers. Für die Belange der vorliegenden Erfindung gilt eine Messung der physikalischen Messgrösse mit einem Messfehler von kleiner/gleich 2 % als hochgenau. Die Grösse des Messfehlers wächst exponentiell mit der Zeitdauer der Messung der physikalischen Messgrösse an. In erster Näherung ist die Grösse des Messfehlers gleich dem Quotienten aus Zeitdauer der Messung und Zeitkonstante. Die erfindungsgemässe lange Zeitkonstante von grösser/gleich 10³ s ermöglicht dann eine hochgenaue quasistatische Messung der physikalischen Messgrösse mit einer Zeitdauer von bis zu 2*10¹ s.

Weder die erfindungsgemässe Ladungsverstärkereinheit noch die erfindungsgemässe Messkette verwenden fest verbaute aktive Hochpassfilter, um bei quasistationären Messungen auftretende niederfrequente Störsignale aus der verstärkten elektrischen Spannung oder den Messdaten zu filtern. Denn solche Hochpassfilter haben eine Grenzfrequenz, unterhalb der sie niederfrequente Störsignale mehr oder weniger stark dämpfen. Diese mehr oder weniger stark ausgeprägte Dämpfung im Bereich der Grenzfrequenz verfälscht jedoch die Messung der physikalischen Messgrösse. Bei Kenntnis der vorliegenden Erfindung kann der Fachmann aktive Hochpassfilter im Bedarfsfall hinzuschalten.

Vorteilhafte Weiterbildungen der Erfindung sind in den abhängigen Ansprüchen aufgeführt.

### Kurze Beschreibung deb Zeichnung

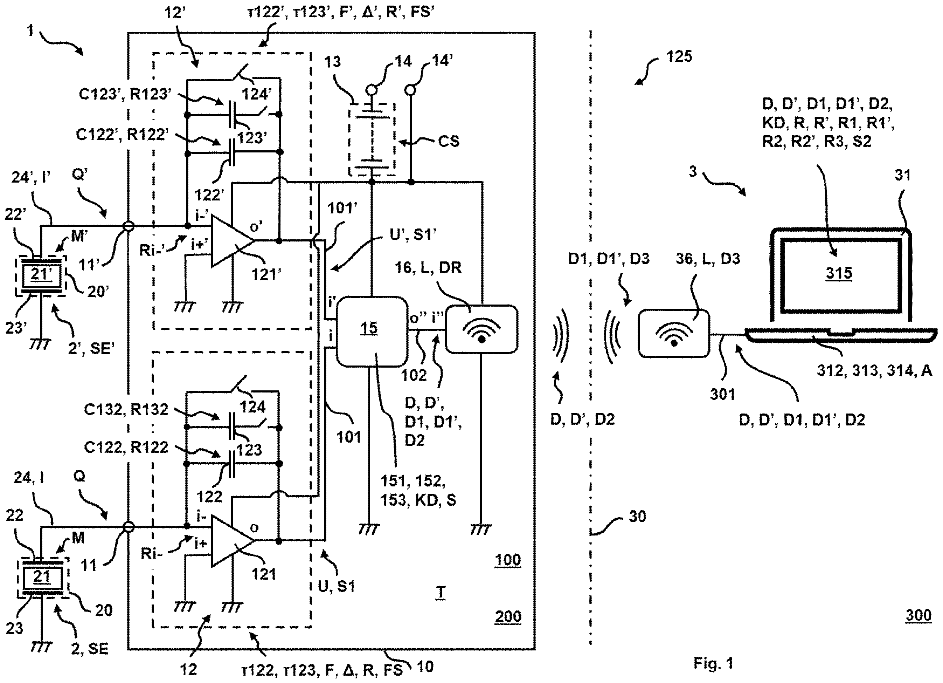

Im Folgenden wird die Erfindung beispielhaft unter Beizug der Fig. 1 näher erklärt. Fig. 1 zeigt einen Schaltplan einer bevorzugten Ausführungsform einer Ladungsverstärkereinrichtung 1.

### Wege zur Ausführung der Erfindung

Die Ladungsverstärkereinrichtung 1 ist dazu eingerichtet, mit mindestens einem piezoelektrischen Sensor 2, 2' zusammenzuwirken. In Fig. 1 ist die Ladungsverstärkereinrichtung 1 über mindestens ein Sensorkabel 24, 24' mit einem piezoelektrischen Sensor 2, 2' elektrisch verbunden. Die Darstellung der Fig. 1 ist schematisch. Die Ladungsverstärkereinrichtung 1, das Sensorkabel 24, 24' und der piezoelektrische Sensor 2, 2' sind an einem Messort 200 angeordnet. Der Messort 200 kann eine industrielle Fertigungsstätte, ein Forschungslabor, usw. sein.

### DER PIEZOELEKTRISCHE SENSOR

Der piezoelektrische Sensor 2, 2' hat die Funktion, eine physikalische Messgrösse M, M' wie eine Kraft, ein Moment, einen Druck, eine Beschleunigung, usw. zu messen. Im Ausführungsbeispiel der Fig. 1 umfasst der piezoelektrische Sensor 2, 2' einen ersten piezoelektrischen Sensor 2 und einen zweiten piezoelektrischen Sensor 2'. Der erste piezoelektrische Sensor 2 weist ein erstes piezoelektrisches Element 21, eine erste Signalelektrode 22 und eine erste Masseelektrode 23 auf. Der zweite piezoelektrische Sensor 2' weist ein zweites piezoelektrisches Element 21', eine zweite Signalelektrode 22' und eine zweite Masseelektrode 23' auf. Der piezoelektrische Sensor 2, 2' weist auch mindestens ein Sensorgehäuse auf, welches jedoch aus Gründen der Übersichtlichkeit figürlich nicht dargestellt ist. Das Ausführungsbeispiel ist nicht bindend für die Umsetzung der vorliegenden Erfindung. Der Fachmann kann die Erfindung auch mit mehr als zwei piezoelektrischen Sensoren oder auch mit nur einem piezoelektrischen Sensor realisieren. Die mehr als zwei piezoelektrischen Sensoren können in einem gemeinsamen Sensorgehäuse oder in mehreren separaten Sensorgehäusen angeordnet sein. Auch können die mehr als zwei piezoelektrischen Sensoren unterschiedliche Komponenten einer physikalischen Messgrösse messen, oder sie können redundant die gleichen Komponenten einer physikalischen Messgrösse messen.

Der piezoelektrische Sensor 2, 2' misst die physikalische Messgrösse M, M' mit einer Messrate von typischerweise 10 kHz (Kilohertz). Im Ausführungsbeispiel der Fig. 1 erzeugt das erste piezoelektrische Element 21 unter der Wirkung einer ersten physikalischen Messgrösse M erste elektrische Ladungen Q. Und das zweite piezoelektrische Element 21' erzeugt unter der Wirkung einer zweiten physikalischen Messgrösse M' zweite elektrische Ladungen Q'. Der piezoelektrische Sensor 2, 2' misst also zwei physikalische Messgrössen M, M'. Die beiden physikalischen Messgrössen M, M' können unterschiedliche physikalische Messgrössen wie eine Kraft, ein Drehmoment, usw. sein. Die beiden physikalischen Messgrössen M, M' können aber auch um zwei Komponenten einer einzigen physikalischen Messgrösse wie eine Kraft entlang einer ersten Richtung und eine Kraft entlang einer zweiten Richtung sein. Der Fachmann kann die Erfindung auch zur Messung von mehr als zwei physikalische Messgrössen oder zur Messung von mehr zwei Komponenten einer physikalischen Messgrösse umsetzen.

Die Signalelektrode 22, 22' greift elektrische Ladungen Q, Q' einer ersten Polarität ab, die elektrischen Ladungen Q, Q' der ersten Polarität haben beispielsweise ein positives Vorzeichen. Im Ausführungsbeispiel der Fig. 1 greift die erste Signalelektrode 22 erste elektrische Ladungen Q einer ersten Polarität ab. Und die zweite Signalelektrode 22' greift zweite elektrische Ladungen Q' einer ersten Polarität ab. Die Anzahl der elektrischen Ladungen Q, Q' ist proportional zum Wert der physikalischen Messgrösse M, M'. Die typische Empfindlichkeit eines piezoelektrischen Elements nach dem longitudinalen Piezoeffekt beträgt 4 pCN⁻¹.

Die Erzeugung der elektrischen Ladungen Q, Q' weist einen Messfehler auf. So wird die Abweichung von der Proportionalität als Linearitätsfehler bezeichnet. Typischerweise ist der Linearitätsfehler kleiner/gleich 10 % (Prozent). Am Nullpunkt, wo der Wert der physikalische Messgrösse M, M' gleich Null ist, sollte auch die Anzahl der elektrischen Ladungen Q, Q' gleich Null sein. Falls die Anzahl der elektrischen Ladungen Q, Q' am Nullpunkt nicht gleich Null ist, wird dies als Nullpunktabweichung bezeichnet. Typischerweise ist die Nullpunktabweichung kleiner/gleich 5 %. Die beiden Messfehler Linearitätsfehler und Nullpunktabweichung sind temperaturabhängig.

Die Masseelektrode 24, 24' greift elektrische Ladungen einer zweiten Polarität ab, die elektrischen Ladungen der zweiten Polarität haben beispielsweise ein negatives Vorzeichen. Im Ausführungsbeispiel der Fig. 1 greift die erste Masseelektrode 23 erste elektrische Ladungen einer zweiten Polarität ab. Und die zweite Masseelektrode 23' greift zweite elektrische Ladungen einer zweiten Polarität ab. Die Masseelektrode 23, 23' liegt auf einem Massepotenzial am Messort 200. Das Massepotenzial ist ein elektrisches Referenzpotenzial wie 0 V. Das Massepotenzial kann das elektrische Potenzial des elektrisch leitfähigen Erdreichs am Messort 200 sein.

Der piezoelektrische Sensor 2, 2' weist ein Sensorgehäuse 20, 20' auf. Das Sensorgehäuse 20, 20' hat die Funktion, die innerhalb des Sensorgehäuses 20, 20' angeordneten Bestandteile des piezoelektrische Sensor 2, 2', wie das piezoelektrische Element 21, 21', die Signalelektrode 22, 22' und die Masseelektrode 23, 23', vor schädlichen Umwelteinflüssen wie Feuchtigkeit, Luft, usw. zu schützen. Dies erfolgt durch einen hermetisch dichten Verschluss der innerhalb des Sensorgehäuses 20, 20' angeordneten Bestandteile gegenüber dem Messort 200. Mit dem Begriff "hermetisch dicht" wird eine Leckrate gegenüber Helium von weniger als 10⁻⁶ mbar*ls⁻¹ verstanden. Das Sensorgehäuse 20, 20' besteht aus einem mechanisch beständigen Werkstoff wie aus einem Reinmetall, einer Metalllegierung wie Stahl, usw. Im Ausführungsbeispiel der Fig. 1 umfasst das Sensorgehäuse 20, 20' ein erstes Sensorgehäuse 20 und ein zweites Sensorgehäuse 20'. Das erste Sensorgehäuse 20 und das zweite Sensorgehäuse 20' sind in Fig. 1 strichliniert dargestellt. Auch hier gilt, dass das Ausführungsbeispiel nicht bindend für die Umsetzung der vorliegenden Erfindung ist. Der Fachmann kann die Erfindung auch mit mehr als zwei Sensorgehäusen oder auch mit nur einem Sensorgehäusen realisieren.

Das Sensorkabel 24, 24' hat die Funktion, die von den Signalelektroden 22, 22' abgegriffenen elektrischen Ladungen Q, Q' verlustfrei elektrisch abzuleiten. Das Sensorkabel 24, 24' weist mindestens einen elektrischen Leiter, eine elektrische Isolation und einen Mantel auf. Im Ausführungsbeispiel der Fig. 1 umfasst das Sensorkabel 24, 24' ein erstes Sensorkabel 24 mit einem ersten elektrischen Leiter und ein zweites Sensorkabel 24' mit einem zweiten elektrischen Leiter. Die erste Signalelektrode 22 ist über figürlich nicht dargestellte Mittel mit dem ersten Sensorkabel 24 elektrisch verbunden. Die zweite Signalelektrode 22' ist über ebenfalls figürlich nicht dargestellte Mittel mit dem zweiten Sensorkabel 24' elektrisch verbunden. Die elektrische Isolation ist gegenüber dem Massepotenzial am Messort 200 hochisolierend. Die hohe elektrische Isolation beträgt mindestens 10⁺¹² Q (Ohm). Das erste Sensorkabel 24 und das zweite Sensorkabel 24' können eine gemeinsame elektrische Isolation und einen gemeinsamen Mantel haben, oder das erste Sensorkabel 24 kann eine eigene elektrische Isolation und einen eigenen Mantel und das zweite Sensorkabel 24' kann eine eigene elektrische Isolation und einen eigenen Mantel haben.

Das Sensorkabel 24, 24' ist möglichst kurz und weist eine Länge l, l' von kleiner/gleich 0.5 m (Meter) auf. Die Länge l, l' des Sensorkabels 24, 24' wird zwischen dem Sensorgehäuse 20, 20' und einem Gehäuse 10 der Ladungsverstärkereinrichtung 1 ermittelt. Im Ausführungsbeispiel der Fig. 1 weist das erste Sensorkabel 24 eine erste Länge l auf und das zweite Sensorkabel 24' weist eine zweite Länge l' auf.

### DAS GEHÄUSE

Die Ladungsverstärkereinrichtung 1 weist ein Gehäuse 10 auf. Das Gehäuse 10 besteht aus einem mechanisch beständigen Werkstoff wie Metall, Kunststoff, usw.

Das Gehäuse 10 ist ein dreidimensionaler Körper und umschliesst ein Inneres 100 vollständig. Das Innere 100 ist ein Hohlraum.

Das Innere 100 kann staubdicht und wasserdicht geschützt sein. Mit den Begriffen "staubdicht" und "wasserdicht" wird ein Schutz gegenüber dem Eindringen von Staub mit einem Partikeldurchmesser von kleiner 1.0 mm (Millimeter) sowie ein Schutz gegenüber dem Eindringen von Wasser beim dauerhaften Untertauchen über eine Tiefe von mehr als 1 m verstanden. Gemäss der DIN EN 60529 besitzt das Gehäuse 10 damit die International Protection (IP) Schutzart IP68.

Das Gehäuse 10 ist bereichsweise elektrisch leitend und liegt auf dem Massepotenzial am Messort 200.

### DIE ELEKTRISCHE DURCHFÜHRUNG

Das Gehäuse 10 weist mindestens eine elektrische Durchführung 11, 11' auf. Die elektrische Durchführung 11, 11' ist über figürlich nicht dargestellte Mittel mit dem Sensorkabel 24, 24' elektrisch verbunden. Die elektrische Durchführung 11, 11' hat die Funktion, im mit dem Sensorkabel 24, 24' elektrisch verbundenen Zustand der Ladungsverstärkereinrichtung 1, vom Sensorkabel 24, 24' elektrisch abgeleitete elektrische Ladungen Q, Q' verlustfrei in das Innere 100 elektrisch weiterzuleiten. Dazu weist die elektrische Durchführung 11, 11' einen elektrischen Leiter auf, welcher gegenüber dem Gehäuse 10 elektrisch hochisoliert ist. Die hohe elektrische Isolation beträgt mindestens 10⁺¹² Ω. Im Ausführungsbeispiel der Fig. 1 umfasst die elektrische Durchführung 11, 11' eine erste elektrische Durchführung 11 und eine zweite elektrische Durchführung 11'. Die erste elektrische Durchführung 11 ist mit dem ersten Sensorkabel 24 elektrisch verbunden. Die zweite elektrische Durchführung 11' ist mit dem zweiten Sensorkabel 24' elektrisch verbunden. Bei Kenntnis der vorliegenden Erfindung kann der Fachmann aber auch ein einziges Sensorkabel verwenden.

Die elektrische Durchführung 11, 11' ist im Einsatz der Ladungsverstärkereinrichtung 1 das einzige kabelgestützte Verbindungsmittel der Ladungsverstärkereinrichtung 1. Mit dem Begriff "Einsatz" wird die Zeitdauer verstanden, in der die Ladungsverstärkereinrichtung 1 in Wirkverbindung mit dem piezoelektrischen Sensor 2, 2' die physikalische Messgrösse M, M' misst.

Im Inneren 100 des Gehäuses 10 sind mindestens eine Ladungsverstärkereinheit 12, 12', eine elektrische Spannungsversorgungseinheit 13, eine Steuereinheit 15 und eine drahtlose Kommunikationseinheit 16 angeordnet.

### DIE LADUNGSVERSTÄRKEREINHEIT

Die Ladungsverstärkereinheit 12, 12' hat die Funktion, weitergeleitete elektrische Ladungen Q, Q' in eine elektrische Spannung U, U' elektrisch zu verstärken. Die Ladungsverstärkereinheit 12, 12' weist einen Operationsverstärker 121, 121' und mindestens einen Kondensator 122, 123, 122', 123' auf.

Dem piezoelektrischen Sensor 2, 2' ist genau eine Ladungsverstärkereinheit 12, 12' zugeordnet. Im Ausführungsbeispiel der Fig. 1 umfasst die Ladungsverstärkereinheit 12, 12' eine erste Ladungsverstärkereinheit 12 mit einem ersten Operationsverstärker 121 und einem zwei ersten Kondensatoren 122, 123 und eine zweite Ladungsverstärkereinheit 12' mit einem zweiten Operationsverstärker 121' und zwei zweiten Kondensatoren 122', 123'. Die erste Ladungsverstärkereinheit 12 verstärkt weitergeleitete erste elektrische Ladungen Q elektrisch in eine erste elektrische Spannung U. Die zweite Ladungsverstärkereinheit 12' verstärkt weitergeleitete zweite elektrische Ladungen Q' elektrisch in eine zweite elektrische Spannung U'. Die erste Ladungsverstärkereinheit 12 und die zweite Ladungsverstärkereinheit 12' sind in Fig. 1 strichliniert dargestellt.

Der Operationsverstärker 121, 121' weist einen invertierenden Eingang i-, i-', einen nichtinvertierenden Eingang i+, i+' und einen Signalausgang o, o' auf. Im Ausführungsbeispiel der Fig. 1 weist der erste Operationsverstärker 121 einen ersten invertierenden Eingang i-, einen ersten nichtinvertierenden Eingang i+ und einen ersten Signalausgang o. Der zweite Operationsverstärker 121' weist einen zweiten invertierenden Eingang i-', einen zweiten nichtinvertierenden Eingang i+' und einen zweiten Signalausgang o' auf. Bei einer Temperatur T gleich 25°C weist der erste invertierende Eingang i- einen ersten elektrischen Eingangswiderstand Ri von grösser/gleich 10⁺¹³ Ω und einen Leckstrom von 10⁻¹⁵ A (Ampere) auf und der zweite invertierende Eingang i-' weist einen zweiten elektrischen Eingangswiderstand Ri' von grösser/gleich 10⁺¹³ Ω und einen Leckstrom von 10⁻¹⁵ A auf. Der nichtinvertierende Eingang i+, i+' liegt auf dem Massepotential des Gehäuses 10.

Für die Versorgung mit einer elektrischen Betriebsspannung weist der Operationsverstärker 121, 121' einen Spannungsversorgungseingang und einen Masseeingang auf. Mit dem Masseeingang liegt der Operationsverstärker 121, 121' auf dem Massepotenzial am Messort 200.

Die elektrische Durchführung 11, 11' ist mit dem invertierenden Eingang i-, i-' des Operationsverstärkers 121, 121' elektrisch verbunden. Somit liegen die elektrische Ladungen Q, Q' am invertierenden Eingang i-, i-' an. Im Ausführungsbeispiel der Fig. 1 ist die erste elektrische Durchführung 11 mit dem ersten invertierenden Eingang i- des ersten Operationsverstärkers 121 elektrisch verbunden und erste elektrische Ladungen Q liegen am ersten invertierenden Eingang i- an. Die zweite elektrische Durchführung 11' ist mit dem zweiten invertierenden Eingang i-' des zweiten Operationsverstärkers 121' elektrisch verbunden und zweite elektrische Ladungen Q' liegen am zweiten invertierenden Eingang i-' an.

Im Ausführungsbeispiel der Fig. 1 sind zwei erste Kondensatoren 122, 123 und zwei zweite Kondensatoren 122', 123' dargestellt. Die zwei ersten Kondensatoren 122, 123 werden nachfolgend auch als erster erster Kondensator 122 und als weiterer erster Kondensator 123 bezeichnet. Die zwei zweiten Kondensatoren 122', 123' werden nachfolgend auch als erster zweiter Kondensator 122' und als weiterer zweiter Kondensator 123' bezeichnet. Bei einer Temperatur T von 25°C weist der erste erste Kondensator 122 einen elektrischen Isolationswiderstand R122 von grösser/gleich 10¹³ Ω auf, der weitere erste Kondensator 123 weist einen elektrischen Isolationswiderstand R123 von grösser/gleich 10¹³ Ω auf, der erste zweite Kondensator 122' weist einen elektrischen Isolationswiderstand R122' von grösser/gleich 10¹³ Ω auf und der weitere zweite Kondensator 123' weist einen elektrischen Isolationswiderstand R123' von grösser/gleich 10¹³ Ω auf. Bei Kenntnis der Erfindung kann der Fachmann weit mehr als zwei Kondensatoren 122, 123, 122', 123' pro Ladungsverstärkereinheit 12, 12' vorsehen.

Der Kondensator 122, 123, 122', 123' ist parallel zum invertierenden Eingang i-, i-' und zum Signalausgang o, o' des Operationsverstärkers 121, 121' geschaltet. Der erste erste Kondensator 122 und der weitere erste Kondensator 123 sind parallel zum ersten invertierenden Eingang i- und zum ersten Signalausgang o des ersten Operationsverstärkers 121 geschaltet. Der erste zweite Kondensator 122' und der weitere zweite Kondensator 123' sind parallel zum zweiten invertierenden Eingang i-' und zum zweiten Signalausgang o' des zweiten Operationsverstärkers 121' geschaltet. Über den Kondensator 122, 123, 122', 123' fliesst vom Signalausgang o, o' rückgekoppelte elektrische Ladung in den invertierenden Eingang i-, i-'.

Jeder Kondensator 122, 123, 122', 123' weist eine Kapazität C122, C123, C122', C123' auf. Im Ausführungsbeispiel der Fig. 1 weist der erste erste Kondensator 122 eine erste erste Kapazität C122 und der weitere erste Kondensator 123 weist eine weitere erste Kapazität C123 auf. Der erste zweite Kondensator 122' weist eine erste zweite Kapazität C122' und der weitere zweite Kondensator 123' weist eine weitere zweite Kapazität C123' auf. Die Kapazitäten C122, C123, C122', C123' sind unterschiedlich gross. So können die erste erste Kapazität C122 und die erste zweite Kapazität C122 um einen Faktor 10 grösser als die weitere erste Kapazität C122' und die weitere zweite Kapazität C123' sein.

Die verstärkte elektrische Spannung U, U' liegt am Signalausgang o, o' des Operationsverstärkers 121, 121' an. Im Ausführungsbeispiel der Fig. 1 liegt die erste elektrische Spannung U am ersten Signalausgang o des ersten Operationsverstärkers 121 an. Und die zweite elektrische Spannung U' liegt am zweiten Signalausgang o' des zweiten Operationsverstärkers 121' an.

Über die Grösse der Kapazität C122, C123, C122', C123' des Kondensators 122, 123, 122', 123' ist ein Verstärkungsfaktor F, F' einstellbar. Verstärkungsfaktor F, F' umfasst einen ersten Verstärkungsfaktor F und einen zweiten Verstärkungsfaktor F'. Dazu lässt sich die Parallelschaltung des Kondensators 122, 123, 122', 123' zum invertierenden Eingang i-, i-' und zum Signalausgang o, o' des Operationsverstärkers 121, 121' wahlweise bewerkstelligen oder unterbrechen. Dies kann durch reversibel schaltbare Schalter geschehen. Im Ausführungsbeispiel der Fig. 1 ist die Parallelschaltung des ersten ersten Kondensators 122 durch einen Schalter bewerkstelligt, während die Parallelschaltung des weiteren ersten Kondensators 123 durch einen Schalter unterbrochen ist. Der erste Verstärkungsfaktor F ist gleich C122 = Q/U. Die Parallelschaltung des ersten zweiten Kondensators 122' ist durch einen Schalter bewerkstelligt, während die Parallelschaltung des weiteren zweiten Kondensators 123' durch einen Schalter unterbrochen ist. Der zweite Verstärkungsfaktor F' ist gleich C122' = Q/U'. Typischerweise lässt sich durch Wahl der Kapazität C122, C123, C122', C123' des Kondensators 122, 123, 122', 123' der Verstärkungsfaktor F, F' über mehrere Grössenordnungen einstellen.

Über den Verstärkungsfaktor F, F' wird auch ein Messbereich R, R' eingestellt, in dem die verstärkte elektrische Spannung U, U' liegt. Typischerweise hat die Ladungsverstärkereinheit 12, 12' mehrere zueinander abgestufte Messbereiche R, R', welche sich jeweils um mindestens eine Grössenordnung voneinander unterscheiden. Jeder Messbereich R, R' hat einen oberen Endwert FS, FS' (Full Scale). Im Ausführungsbeispiel der Fig. 1 weist der erste Ladungsverstärkereinheit 12 für die erste verstärkte elektrische Spannung U erste Messbereiche R mit ersten oberen Endwerten FS auf, welche über den ersten Verstärkungsfaktor F eingestellt werden. Und der zweite Ladungsverstärkereinheit 12' weist für die zweite verstärkte elektrische Spannung U' zweite Messbereiche R' mit zweiten oberen Endwerten FS' auf, welche über den zweiten Verstärkungsfaktor F' eingestellt werden. Um eine Übersteuerung und somit Verfälschung der Messung der physikalischen Messgrösse M, M' zu vermeiden, soll die verstärkte elektrische Spannung U, U' den oberen Endwert FS, FS' nicht übersteigen und es soll auch nicht mehr als eine Grössenordnung kleiner als der Endwert FS, FS' sein. Je höher die Auflösung der verstärkten elektrischen Spannung U, U' ist, desto kleiner ist auch dessen Messwert-zu-Rauschverhältnis. Und auch der Linearitätsfehler ist in den verschiedenen Messbereichen R, R' unterschiedlich stark ausgeprägt. Für eine Messung der physikalischen Messgrösse M, M' mit möglichst hoher Auflösung soll der Messbereich R, R' also so eingestellt sein, dass die verstärkte elektrische Spannung U, U' grösser/gleich 10 % des Endwerts FS, FS' und kleiner/gleich 90 % des Endwerts FS, FS' ist.

Die elektrische Verstärkung der elektrischen Ladungen Q, Q' weist einen Verstärkungsfehler auf. So wird die Abweichung von der tatsächlichen elektrischen Verstärkung der elektrischen Ladungen Q, Q' und dem eingestellten Verstärkungsfaktor F, F' als Verstärkungsfehler bezeichnet. Oft ist der Verstärkungsfehler durch herstellungsbedingte Schwankungen der Grösse des Kondensators 122, 123, 122', 123' verursacht. Bei einer Temperatur T von 25°C ist der Verstärkungsfehler kleiner/gleich 5 %.

Die elektrische Verstärkung der elektrischen Ladungen Q, Q' weist eine Zeitkonstante τ122, τ123, τ122', τ123' auf. Die Zeitkonstante τ122, τ123, τ122', τ123' ist das Produkt einer Parallelschaltung aus vielfältigen elektrischen Widerständen der Ladungsverstärkereinheit 12, 12' und der Kapazität C122, C123, C122', C123' der Ladungsverstärkereinheit 12, 12'. Die elektrischen Widerstände umfassen den elektrischen Eingangswiderstand Ri, Ri', den elektrischen Isolationswiderstand R122, R123, R122', R123', einen elektrischen Widerstand der elektrischen Schaltung des Operationsverstärkers 121, 121', einen elektrischen Widerstand eines Reset-Schaltelementes 124, 124', einen elektrischen Widerstand der Leitungen der der Ladungsverstärkereinheit 12, 12', usw. In erster Näherung wird die Zeitkonstante τ122, τ123, τ122', τ123' wird durch das Produkt der Parallelschaltung des elektrischen Eingangswiderstandes Ri, Ri' und des elektrischen Isolationswiderstandes R122, R123, R122', R123' mit der Kapazität C122, C123, C122', C123' gebildet. Die Zeitkonstante τ122, τ123, τ122', τ123' umfasst eine erste Zeitkonstante τ122 = (Ri+ R122) * C122, eine weitere erste Zeitkonstante τ123 = (Ri+ R123) * C123, eine erste zweite Zeitkonstante τ122' = (Ri'+ R122') * C122' und eine weitere zweite Zeitkonstante τ123' = (Ri'+ R123') * C123'. Erfindungsgemäss ist die Zeitkonstante τ122, τ123, τ122', τ123' grösser/gleich 10³ s, vorzugsweise grösser/gleich 5*10³ s.

Aufgrund der endlich hohen elektrischen Isolationswiderstände treten am invertierenden Eingang i-, i-' und am Kondensator 122, 123, 122', 123' der Ladungsverstärkereinheit 12, 12' Leckströme auf. Ferner weist der Operationsverstärker 121, 121' eine herstellbedingte Eingangs-Offset-Spannung auf. Das Zusammenwirken der Leckströme mit der Eingangs-Offset-Spannung führt zu einem Messfehler Δ, Δ'. Die Messung der physikalischen Messgrösse M, M' gilt als hochgenau, wenn der Messfehler Δ, Δ' kleiner/gleich 2 % ist. Die Grösse des Messfehlers Δ, Δ' wächst exponentiell mit der Zeitdauer t der Messung der physikalischen Messgrösse M, M' an. In erster Näherung ist die Zeitdauer t einer hochgenauen quasistatischen Messung der physikalischen Messgrösse M, M' gleich dem Produkt von Messfehler Δ, Δ' und Zeitkonstante τ122, τ123, τ122', τ123'. Die Ladungsverstärkereinheit 12, 12' ist dazu eingerichtet, die physikalische Messgrösse M, M' über eine Zeitdauer t hochgenau quasistatisch zu messen. Für eine Zeitkonstante τ122, τ123, τ122', τ123' grösser/gleich 10³ s beträgt die Zeitdauer t einer hochgenauen quasistatischen Messung der physikalischen Messgrösse M, M' bis zu 2*10¹ s. Für eine Zeitkonstante τ122, τ123, τ122', τ123' grösser/gleich 5*10³ s beträgt die Zeitdauer t einer hochgenauen quasistatischen Messung der physikalischen Messgrösse M, M' bis zu 10² s.

Die Ladungsverstärkereinheit 12, 12' ist dazu eingerichtet, den invertierenden Eingang i-, i-' und den Kondensator 122, 123, 122', 123' zu Beginn einer Messung der physikalischen Messgrösse M, M' zu entladen. Dazu weist Ladungsverstärkereinheit 12, 12' ein Reset-Schaltelement 124, 124' auf. Das Reset-Schaltelement 124, 124' ist parallel zum invertierenden Eingang i-, i-' und zum Signalausgang o, o' des Operationsverstärkers 121, 121' und somit auch parallel zum Kondensator 122, 123, 122', 123' geschaltet. Durch Schliessen des Reset-Schaltelementes 124, 124' fliessen Leckströme am invertierenden Eingang i-, i-' und am Kondensator 122, 123, 122', 123' der Ladungsverstärkereinheit 12, 12' ab.

### DIE ELEKTRISCHE SPANNUNGSVERSORGUNGSEINHEIT

Die elektrische Spannungsversorgungseinheit 13 ist in Fig. 1 strichliniert dargestellt. Sie hat die Funktion, für die Ladungsverstärkereinheit 12, 12', die Steuereinheit 15 und die drahtlose Kommunikationseinheit 16 elektrische Energie als elektrische Betriebsspannung von 5 V, 10 V, usw. zu liefern. Dazu weist die elektrische Spannungsversorgungseinheit 13 mindestens einen wiederaufladbaren Akkumulator wie ein Lithium-Ionen-Akkumulator, ein Nickel-Metallhydrid-Akkumulator, usw. oder mindestens eine nicht wiederaufladbare Batterie wie eine Lithiumbatterie, eine Alkali-Mangan-Batterie, usw. auf. Im Ausführungsbeispiel der Fig. 1 ist die elektrische Spannungsversorgungseinheit 13 ein wiederaufladbarer Akkumulator, welcher über elektrische Ladekontakte 14, 14' im Gehäuse 10 wiederaufladbar ist. Der Fachmann kann die Erfindung aber auch mit einer nicht wiederaufladbaren Batterie als elektrische Spannungsversorgungseinheit 13 realisieren, dann sind keine elektrische Ladekontakte 14, 14' nötig. In dem Fall kann das Gehäuse eine verschliessbare Öffnung aufweisen, über welche Öffnung die nicht wiederaufladbare Batterie im Gehäuse auswechselbar ist.

Durch die elektrische Spannungsversorgungseinheit wird im Einsatz der Ladungsverstärkereinrichtung 1 kein Kabel bis zur Ladungsverstärkereinrichtung 1 für eine elektrische Betriebsspannung benötigt. Die elektrische Spannungsversorgungseinheit 13 speichert ausreichend elektrische Energie für einen andauernden Betrieb der Ladungsverstärkereinrichtung 1 von mindestens 5 h (Stunden), vorzugsweise von mindestens 10 h, vorzugsweise von mindestens 20 h, vorzugsweise von mindestens 40 h.

Die elektrische Spannungsversorgungseinheit 13 weist einen ersten Ausgang und einen zweiten Ausgang auf. Der erste Ausgang ist über elektrische Versorgungsleitungen mit Spannungsversorgungseingängen der Ladungsverstärkereinheit 12, 12', der Steuereinheit 15 und der drahtlosen Kommunikationseinheit 16 elektrisch verbunden. Über die elektrischen Versorgungsleitungen wird der Ladungsverstärkereinheit 12, 12', der Steuereinheit 15 und der drahtlosen Kommunikationseinheit 16 eine elektrische Betriebsspannung bereitgestellt. Im Ausführungsbeispiel der Fig. 1 ist der erste Ausgang der elektrischen Spannungsversorgungseinheit 13 über eine elektrische Versorgungsleitung mit einem Spannungsversorgungseingang der ersten Ladungsverstärkereinheit 12 und über eine weitere elektrische Versorgungsleitung mit einem Spannungsversorgungseingang der zweiten Ladungsverstärkereinheit 12' elektrisch verbunden.

### DIE STEUEREINHEIT

Die Steuereinheit 15 weist mindestens einen Analog-/Digital-Wandler 151, mindestens einen Datenspeicher 152 und mindestens einen Datenprozessor 153 auf. Die Steuereinheit 15 hat mehrere Funktionen. Eine ihrer Funktionen besteht darin, die verstärkte elektrische Spannung U, U' in digitale Messdaten D, D' zu wandeln. Dazu weist die Steuereinheit 15 mindestens einen Signaleingang i, i' auf, welcher über mindestens eine Signalleitung 101, 101' mit dem Signalausgang o, o' des Operationsverstärkers 121, 121' elektrisch verbunden ist. Somit gelangt die verstärkte elektrische Spannung U, U' zum Signaleingang i, i' der Steuereinheit 15 und liegt dort an. Im Ausführungsbeispiel der Fig. 1 weist die Steuereinheit 15 mindestens einen ersten Signaleingang i auf, welcher über eine erste Signalleitung 101 mit dem ersten Signalausgang o des ersten Operationsverstärkers 121 elektrisch verbunden ist, so dass die erste verstärkte elektrische Spannung U zum ersten Signaleingang i gelangt. Und die Steuereinheit 15 weist einen zweiten Signaleingang i' auf, welcher über eine zweite Signalleitung 101' mit dem zweiten Signalausgang o' des zweiten Operationsverstärkers 121' elektrisch verbunden ist, so dass die zweite verstärkte elektrische Spannung U' zum zweiten Signaleingang i' gelangt.

Das am Signaleingang i anliegende verstärkte elektrische Spannung U, U' wird vom Analog-/Digital-Wandler 151 der Steuereinheit 15 in digitale Messdaten D, D' gewandelt. Im Ausführungsbeispiel der Fig. 1 wandelt der Analog-/Digital-Wandler 151 die erste verstärkte elektrische Spannung U in erste Messdaten D und sie wandelt die zweite verstärkte elektrische Spannung U' in zweite Messdaten D'.

Die Steuereinheit 15 weist einen Datenausgang o" auf. Die Steuereinheit 15 ist dazu eingerichtet, Messdaten D, D' am Datenausgang o'' bereitzustellen.

Die Steuereinheit 15 weist mindestens ein Steuerprogramm S auf, welches im Datenspeicher 152 gespeichert und in den Datenprozessor 153 ladbar ist.

Das in den Datenprozessor 153 geladene Steuerprogramm S kann die Messdaten D, D' komprimieren. Dabei entfernt das Steuerprogramm S redundante Informationen in den Messdaten D, D'. Durch die Kompression wird die Menge der Messdaten D, D' reduziert, sodass eine reduzierte Menge an Messdaten D, D' weiterzubearbeiten ist. Durch die Kompression wird die Menge der Messdaten D, D' um mindestens die Hälfte reduziert.

Das in den Datenprozessor 153 geladene Steuerprogramm S kann die Messdaten D, D' korrigieren. Dazu können im Datenspeicher 152 Korrekturdaten KD gespeichert sein. Mit den Korrekturdaten KD wird mindestens einer der folgenden Messfehler korrigiert, ein Linearitätsfehler, eine Nullpunktabweichung und ein Verstärkungsfehler. Die Korrekturdaten KD sind zeitlich vor der Messung der physikalischen Messgrösse M, M' in mindestens einem gesonderten Korrekturvorgang erzeugt worden. Das in den Datenprozessor 153 geladene Steuerprogramm S greift auf die gespeicherten Korrekturdaten KD zu und korrigiert die Messdaten D, D' mit den Korrekturdaten KD, indem es einzelne Messdaten D, D' mit einzelnen Korrekturdaten KD multipliziert. Die korrigierten Messdaten D, D' weisen einen Messfehler von kleiner/gleich 1 % auf.

Die Messdaten D, D' sind binäre Zahlenfolgen mit einer Auflösung von 12 Bit, 16 Bit, usw.

Eine zweite Funktion der Steuereinheit 15 besteht darin, Statusdaten D2 über den Status des piezoelektrischen Sensors 2, 2' und der Ladungsverstärkereinrichtung 1 zu bilden. Die Statusdaten D2 sind digitale Daten mit binären Zahlenfolgen.

Das in den Datenprozessor 153 geladene Steuerprogramm S kann den aktuellen Ladestatus CS der elektrischen Spannungsversorgungseinheit 13 erfassen und für den erfassten aktuellen Ladestatus CS der elektrischen Spannungsversorgungseinheit 13 Statusdaten D2 bilden.

Das in den Datenprozessor 153 geladene Steuerprogramm S kann aber auch den aktuell eingestellten Messbereich R, R' der Ladungsverstärkereinheit 12, 12' erfassen und für den erfassten aktuell eingestellten Messbereich R, R' Statusdaten D2 bilden.

Auch können im Datenspeicher 152 der Steuereinheit 15 Statusdaten D2 über die Empfindlichkeit SE, SE' des piezoelektrischen Sensors 2, 2' gespeichert sein. Die Empfindlichkeit SE, SE' ist sensorspezifisch und gibt an, welche Anzahl elektrische Ladungen Q, Q' der piezoelektrische Sensor 2, 2' pro Einheit der physikalischen Messgrösse M, M' erzeugt. Die Empfindlichkeit SE, SE' wird zeitlich vor der Messung der physikalischen Messgrösse M, M' in einem gesonderten Eichvorgang bestimmt. Im Ausführungsbeispiel der Fig. 1 weist der erste piezoelektrische Sensor 2 eine erste Empfindlichkeit SE auf und der zweite piezoelektrische Sensor 2' weist eine zweite Empfindlichkeit SE' auf. Das in den Datenprozessor 153 geladene Steuerprogramm S bildet die Statusdaten D2 über die Empfindlichkeit SE, SE' des piezoelektrischen Sensors 2, 2' durch Laden aus dem Datenspeicher 152.

Somit bildet das in den Datenprozessor 153 geladene Steuerprogramm S mindestens eine der folgenden Statusdaten D2: Statusdaten D2 über den aktuellen Ladestatus CS der elektrischen Spannungsversorgungseinheit 13, Statusdaten D2 über den aktuell eingestellten Messbereich R, R' der Ladungsverstärkereinheit 12, 12' und Statusdaten D2 über die Empfindlichkeit SE, SE' des piezoelektrischen Sensors 2, 2'. Die Steuereinheit 15 ist dazu eingerichtet, Statusdaten D2 am Datenausgang o'' bereitzustellen.

Eine weitere Funktion der Steuereinheit 15 besteht darin, für Steuerdaten D1, D1' Steuersignale S1, S1' zur Ansteuerung der Ladungsverstärkereinrichtung 1 zu erzeugen. Daher ist die Steuereinheit 15 dazu eingerichtet, am Datenausgang o'' anliegende Steuerdaten D1, D1 zu laden. Auch die Steuerdaten D1, D1' sind digitale Daten mit binären Zahlenfolgen. Das in den Datenprozessor 153 geladene Steuerprogramm S kann für Steuerdaten D1, D1' Steuersignale S1, S1' zur Ansteuerung der Ladungsverstärkereinrichtung 1 erzeugen. Im Ausführungsbeispiel der Fig. 1 umfassen die Steuerdaten D1, D1' erste Steuerdaten D1 und zweite Steuerdaten D1'.

Das in den Datenprozessor 153 geladene Steuerprogramm S kann für Steuerdaten D1, D1' die ausgeschaltete Ladungsverstärkereinrichtung 1 einschalten und umgekehrt kann das Steuerprogramm S die eingeschaltete Ladungsverstärkereinrichtung 1 für Steuerdaten D1, D1' ausschalten. Dazu erzeugt das Steuerprogramm S mit den Steuerdaten D1, D1' mindestens ein Steuersignal S1, S1', um mit dem Steuersignal S1, S1' die eingeschaltete Ladungsverstärkereinrichtung 1 auszuschalten oder die ausgeschaltete Ladungsverstärkereinrichtung 1 einzuschalten. Im Ausführungsbeispiel der Fig. 1 erzeugt das Steuerprogramm S mit ersten Steuerdaten D1 ein erstes Steuersignal S1 und mit zweiten Steuerdaten D1' erzeugt es ein zweites Steuersignal S1'.

Auch kann das in den Datenprozessor 153 geladene Steuerprogramm S für Steuerdaten D1, D1' einen befohlenen Verstärkungsfaktor F, F' bei der Ladungsverstärkereinheit 12, 12' einstellen. Dazu erzeugt das Steuerprogramm S mit Steuerdaten D1, D1' mindestens ein Steuersignal S1, S1', um mit dem Steuersignal S1, S1' einen befohlenen Verstärkungsfaktor F, F' bei der Ladungsverstärkereinheit 12, 12' einstellen, damit die verstärkte elektrische Spannung U, U' in einem Messbereich R, R' mit bestmöglicher Auflösung liegt. Die Einstellung des befohlenen Verstärkungsfaktors F, F' erfolgt durch wahlweise Bewerkstelligung oder Unterbrechung der Parallelschaltung des Kondensators 122, 123, 122', 123' zum invertierenden Eingang i-, i-' und zum Signalausgang o, o'. Im Ausführungsbeispiel der Fig. 1 erzeugt das in den Datenprozessor 153 geladene Steuerprogramm S mit den ersten Steuerdaten D1 ein erstes Steuersignal S1, um mit dem ersten Steuersignal S1 einen befohlenen ersten Verstärkungsfaktor F bei der ersten Ladungsverstärkereinheit 12 einstellen, damit die erste verstärkte elektrische Spannung U in einem ersten Messbereich R mit bestmöglicher Auflösung liegt. Und mit den zweiten Steuerdaten D1' erzeugt das in den Datenprozessor 153 geladene Steuerprogramm S ein zweites Steuersignal S1', um mit dem zweiten Steuersignal S1' einen befohlenen zweiten Verstärkungsfaktor F' bei der zweiten Ladungsverstärkereinheit 12' einstellen, damit die zweite verstärkte elektrische Spannung U' in einem zweiten Messbereich R' mit bestmöglicher Auflösung liegt.

Die Steuereinheit 15 weist einen Spannungsversorgungseingang und einen Masseeingang auf. Mit dem Masseeingang liegt die Steuereinheit 15 auf dem Massepotenzial am Messort 200.

### DIE DRAHTLOSE KOMMUNIKATIONSEINHEIT

Die drahtlose Kommunikationseinheit 16 weist einen Dateneingang i'' auf. Der Dateneingang i'' ist über eine Datenleitung 102 elektrisch mit dem Datenausgang o'' der Steuereinheit 15 verbunden. Somit gelangen Messdaten D, D' und/oder Statusdaten D2 über die Datenleitung 102 vom Datenausgang o" der Steuereinheit 15 zum Dateneingang i'' der drahtlose Kommunikationseinheit 16 und liegen dort an. Die Konjunktion "und/oder" umfasst drei logische Verknüpfungen, und zwar die UND-Verknüpfung (Konjunktion), die ODER-Verknüpfung (Disjunktion) und die ENTWEDER-ODER-Verknüpfung (Alternative). Die drahtlose Kommunikationseinheit 16 ist dazu eingerichtet, die am Dateneingang i'' anliegenden Messdaten D, D' und/oder Statusdaten D2 zu laden.

Die drahtlose Kommunikationseinheit 16 hat die Funktion, die Messdaten D, D' und/oder die Statusdaten D2 drahtlos zu übertragen sowie die Steuerdaten D1, D1' drahtlos zu empfangen. Bei der drahtlosen Datenübertragung werden Messdaten D, D' und/oder Statusdaten D2 sowie Steuerdaten D1, D1' als elektromagnetische Wellen gesendet. Dazu weist die drahtlose Kommunikationseinheit 16 eine Antenne zum Senden von Messdaten D, D' und/oder Statusdaten D2 sowie zum Empfangen von Steuerdaten D1, D1' auf. Die drahtlose Datenübertragung der Messdaten D, D' und/oder der Statusdaten D2 sowie der Steuerdaten D1, D1' ist in Fig. 1 als gekrümmte Kreissegmente dargestellt.

Die drahtlose Datenübertragung der Messdaten D, D' und/oder der Statusdaten D2 sowie der Steuerdaten D1, D1' kann mit einem Funkstandard wie Bluetooth Low Energy (BLE) erfolgen. Die drahtlose Datenübertragung der Messdaten D, D' und/oder der Statusdaten D2 sowie der Steuerdaten D1, D1' erfolgt mit einer Sendeleistung L im Bereich von 0.1 mW (Milliwatt) bis 10 mW.

Die drahtlose Datenübertragung der Messdaten D, D' und/oder der Statusdaten D2 sowie der Steuerdaten D1, D1' kann im Industrial Scientific and Medical (ISM)-Band von 2.402 GHz (Gigahertz) bis 2.480 GHz erfolgen. Im ISM-Band können mehreren Übertragungskanäle verwendet werden. So können im ISM-Band vierzig Übertragungskanäle, von denen jeder einzelne Übertragungskanal eine Bandbreite von 2 MHz (Megahertz) aufweist.

Die drahtlose Datenübertragung der Messdaten D, D' erfolgt in Echtzeit. Für die Belange der vorliegenden Erfindung bedeutet dies eine drahtlose Datenübertragung der Messdaten D, D' in einer Zeit von kleiner/gleich 0.5 sec, vorzugsweise kleiner/gleich 1.0 sec nach der Erzeugung der elektrischen Ladungen Q, Q'. Somit ist keine Pufferung der Messdaten D, D' im Datenspeicher 152 der Steuereinheit 15 und/oder in einem Datenspeicher der drahtlose Kommunikationseinheit 16 nötig, was kostengünstig ist, da kein Speicherbedarf besteht. Auch wird dadurch eine kontinuierliche und schnelle Auswertung der Messdaten D, D' in der Auswerteeinrichtung 3 ermöglicht.

Die drahtlose Kommunikationseinheit 16 ist dazu eingerichtet, Steuerdaten D1, D1' am Dateneingang i" bereitzustellen. Von hier aus gelangen die Steuerdaten D1, D1' über die Datenleitung 102 zum Datenausgang o" der Steuereinheit 15. Somit ist die Datenleitung 102 eine bidirektionale Datenleitung zum Leiten von Messdaten D, D' und/oder Steuerdaten D2 sowie zum Leiten von Steuerdaten D1, D1'.

Die drahtlose Kommunikationseinheit 16 weist einen Spannungsversorgungseingang und einen Masseeingang auf. Mit dem Masseeingang liegt die drahtlose Kommunikationseinheit 16 auf dem Massepotenzial am Messort 200.

### DIE MESSKETTE

Die Ladungsverstärkereinrichtung 1 ist dazu eingerichtet, nicht nur mit dem piezoelektrischen Sensor 2, 2', sondern auch mit einer Auswerteeinrichtung 3 zusammenzuwirken. Der piezoelektrische Sensor 2, 2', die Ladungsverstärkereinrichtung 1 und die Auswerteeinrichtung 3 bilden eine Messkette 123. Während der piezoelektrische Sensor 2, 2' und die Ladungsverstärkereinrichtung 1 am Messort 200 angeordnet sind, befindet sich die Auswerteeinrichtung 3 an einem Auswerteort 300. Der Auswerteort 300 liegt in einer räumlichen Beabstandung 30 zum Messort 200. Der Auswerteort 300 kann ein Arbeitsplatz in einem Büro, in einem Kontrollraum, usw. sein. Die räumliche Beabstandung 30 ist eine Entfernung von grösser/gleich 0.2 m und kleiner/gleich 20 m.

### DIE AUSWERTEEINRICHTUNG

Die Auswerteeinrichtung 3 hat mehrere Funktionen. Eine ihrer Funktionen besteht darin, die von der drahtlosen Kommunikationseinheit 16 gesendeten Messdaten D, D' und/oder Statusdaten D2 zu empfangen und auszuwerten. Eine weitere ihrer Funktionen besteht darin, Steuerdaten D1, D1' zu erzeugen und an die Ladungsverstärkereinrichtung 1 zu senden, um die Ladungsverstärkereinrichtung 1 mit den Steuerdaten D1, D1' anzusteuern. Dazu weist die Auswerteeinrichtung 3 eine Auswerteeinheit 31 mit mindestens einem weiteren Datenspeicher 312, mindestens einem weiteren Datenprozessor 313, mindestens einer Eingabeeinheit 314 und mindestens einer Ausgabeeinheit 315 auf. Die Auswerteeinrichtung 3 weist zudem auch eine weitere Datenleitung 301 und eine weitere drahtlose Kommunikationseinheit 36 auf.

### DIE WEITERE DRAHTLOSE KOMMUNIKATIONSEINHEIT

Die weitere drahtlose Kommunikationseinheit 36 weist eine Antenne zum Empfangen von Messdaten D, D' und/oder von Statusdaten D2 und zum Senden von Steuerdaten D1, D1' auf. Die drahtlose Kommunikationseinheit 16 und die weitere drahtlose Kommunikationseinheit 36 sind dazu eingerichtet, die drahtlose Datenübertragung der Messdaten D, D' und/oder der Statusdaten D2 sowie der Steuerdaten D1, D1' über die räumliche Beabstandung 30 hinweg durchzuführen.

Vor der drahtlosen Datenübertragung der Messdaten D, D' und/oder der Statusdaten D2 sowie der Steuerdaten D1, D1' bauen die drahtlose Kommunikationseinheit 16 und die weitere drahtlose Kommunikationseinheit 36 eine Verbindung auf. Drei der vierzig Übertragungskanäle des ISM-Bands sind Anmeldekanäle. In den drei Anmeldekanälen senden und empfangen die drahtlose Kommunikationseinheit 16 und die weitere drahtlose Kommunikationseinheit 36 Verbindungsdaten VD zum Aufbau einer Verbindung.

Die drahtlose Datenübertragung der Messdaten D, D' kann wahlweise mit einer tiefen oder einer hohen Datenübertragungsrate DR erfolgen. So kann die tiefe Übertragungsrate 1 Mbit/sec (Megabit pro Sekunde) betragen und die hohe Übertragungsrate DR kann 2 Mbit/sec betragen. Dazu erzeugt und sendet die weitere drahtlose Kommunikationseinheit 36 Verbindungsdaten D3 mit Angaben der ausgewählten Datenübertragungsrate DR an die drahtlose Kommunikationseinheit 16. Die drahtlose Kommunikationseinheit 16 empfängt die Verbindungsdaten D3 mit den Angaben zur ausgewählten Datenübertragungsrate DR. Die drahtlose Kommunikationseinheit 16 sendet daraufhin die Messdaten D, D' und/oder die Statusdaten D2 mit der ausgewählten Datenübertragungsrate DR an die weitere drahtlose Kommunikationseinheit 36.

Die weitere drahtlose Kommunikationseinheit 36 und die Auswerteeinheit 31 können über figürlich nicht dargestellte Schnittstellen elektrisch mit der weiteren Datenleitung 301 verbunden sein. Die weitere Datenleitung 301 hat die Funktion, Messdaten D, D' und/oder Statusdaten D2 von der weiteren drahtlosen Kommunikationseinheit 36 zur Auswerteeinheit 31 zu übertragen und Steuerdaten D1, D1' von der Auswerteeinheit 31 zur weiteren drahtlosen Kommunikationseinheit 36 zu übertragen. Somit ist die weitere Datenleitung 301 eine bidirektionale Datenleitung und kann ein Datenbus wie der Universal Serial Bus (USB), usw. sein.

### DIE AUSWERTEEINHEIT

Die Auswerteeinheit 31 weist mindestens ein Auswerteprogramm A auf, welches im weiteren Datenspeicher 312 gespeichert und in den weiteren Datenprozessor 313 ladbar ist. Das in den weiteren Datenprozessor 313 geladene Auswerteprogramm A erzeugt Befehle, welche Befehle von der Auswerteeinheit 31 automatisch ausgeführt werden. Das Adjektiv "automatisch" hat die Bedeutung, dass die vom Auswerteprogramm A erzeugten Befehle von der Auswerteeinheit 31 ohne Mitwirkung einer menschlichen Person ausgeführt werden.

Die Auswerteeinheit 31 ist dazu eingerichtet, Messdaten D, D' und Statusdaten D2 auszuwerten.

So kann das in den weiteren Datenprozessor 313 geladene Auswerteprogramm A die Messdaten D, D' auswerten, indem das Auswerteprogramm A Messdaten D, D', welche nicht bereits durch das Steuerprogramm S der Steuereinheit 15 korrigiert, worden sind, korrigiert. Dazu können im weiteren Datenspeicher 312 Korrekturdaten KD speichern sein. Mit den Korrekturdaten KD wird mindestens einer der folgenden Messfehler korrigiert, ein Linearitätsfehler, eine Nullpunktabweichung und ein Verstärkungsfehler. Die Korrekturdaten KD sind zeitlich vor der Messung der physikalischen Messgrösse M, M' in mindestens einem gesonderten Korrekturvorgang erzeugt worden. Das in den weiteren Datenprozessor 313 geladene Auswerteprogramm A greift auf die gespeicherten Korrekturdaten KD zu und korrigiert die Messdaten D, D' mit den Korrekturdaten KD, indem es einzelne Messdaten D, D' mit einzelnen Korrekturdaten multipliziert. Die korrigierten Messdaten D, D' weisen einen Messfehler von kleiner/gleich 1 % auf.

Die Messdaten D, D' sowie die Statusdaten D2 lassen sich im weiteren Datenspeicher 312 der Auswerteeinheit 31 speichern. Die im weiteren Datenspeicher 312 gespeicherten Messdaten D, D' können komprimiert oder unkomprimiert sein. Die im weiteren Datenspeicher 312 gespeicherten Messdaten D, D' oder die von der Auswerteeinheit 31 ausgewerteten Messdaten D, D' können korrigiert oder nicht korrigiert sein.

Auch kann das in den weiteren Datenprozessor 313 geladene Auswerteprogramm A die Messdaten D, D' auswerten, indem das Auswerteprogramm A Messdaten D, D' graphisch über der Zeit darstellt. Die Ausgabeeinheit 315 kann ein Bildschirm sein, auf dem Daten für die menschliche Person graphisch darstellbar sind. So kann das Auswerteprogramm A Messdaten D, D' auf der Ausgabeeinheit 315 graphisch über der Zeit darstellen.

Zudem kann das in den weitere Datenprozessor 313 geladene Auswerteprogramm A die Messdaten D, D' auswerten, indem das Auswerteprogramm A überprüft, ob die Messdaten D, D' innerhalb von vordefinierten Grenzwerten R1, R1', R2, R2' eines Messbereichs R, R' der Ladungsverstärkereinheit 12, 12' liegen. Denn die von der Ladungsverstärkereinheit 12, 12' verstärkte elektrische Spannung U, U' soll in einem Messbereich R, R' mit bestmöglicher Auflösung liegen. Ein unterer Grenzwert R1, R1' ist definiert als grösser/gleich 10 % des Endwerts FS, FS' eines Messbereichs R, R' und ein oberer Grenzwert R2, R2' ist definiert als kleiner/gleich 90 % des Endwerts FS, FS' eines Messbereichs R, R'. Dazu sind im weiteren Datenspeicher 312 vordefinierte Grenzwerte R1, R1', R2, R2' von Messbereichen R, R' der Ladungsverstärkereinheit 12, 12' gespeichert. Das in den weitere Datenprozessor 313 geladene Auswerteprogramm A greift auf die gespeicherten vordefinierten Grenzwerte R1, R1', R2, R2' zu. Das in den weiteren Datenprozessor 313 geladene Auswerteprogramm A wertet die Statusdaten D2 aus und ermittelt den aktuell eingestellten Messbereich R, R' der Ladungsverstärkereinheit 12, 12'. Das in den weiteren Datenprozessor 313 geladene Auswerteprogramm A wertet die Messdaten D, D' aus und überprüft, ob die Messdaten D, D' innerhalb von vordefinierten Grenzwerten R1, R1', R2, R2' des aktuell eingestellten Messbereichs R, R' liegen. Falls die Messdaten D, D' nicht innerhalb der vordefinierten Grenzwerte R1, R1', R2, R2' des aktuell eingestellten Messbereichs R, R' liegen, erzeugt das in den weitere Datenprozessor 313 geladene Auswerteprogramm A Steuerdaten D1, D1' mit dem Befehl, einen anderen Verstärkungsfaktor F, F' bei der Ladungsverstärkereinheit 12, 12' einzustellen, damit die verstärkte elektrische Spannung U, U' in einem anderen Messbereich R, R' mit bestmöglicher Auflösung liegt.

Das in den weitere Datenprozessor 313 geladene Auswerteprogramm A kann die Statusdaten D2 auch dahingehend auswerten, indem es überprüft, ob der aktuelle Ladestatus der elektrischen Spannungsversorgungseinheit 13 einen vorgegebenen unteren Ladegrenzwert R3 nicht unterschreitet. Falls der aktuelle Ladestatus der elektrischen Spannungsversorgungseinheit 13 den unteren Ladegrenzwert R3 unterschreitet, kann das in den weitere Datenprozessor 313 geladene Auswerteprogramm A ein Alarmsignal S2 erzeugen und auf der Ausgabeeinheit 315 ausgeben, sodass eine menschliche Person über den tiefen Ladestatus der elektrischen Spannungsversorgungseinheit 13 alarmiert ist.

Weiter kann das in den weitere Datenprozessor 313 geladene Auswerteprogramm A die Statusdaten D2 auswerten, indem es die Empfindlichkeit des piezoelektrischen Sensors 2, 2' als Sensorsignal S4 auf der Ausgabeeinheit 315 ausgibt, sodass eine menschliche Person davon Kenntnis nimmt.

Die Auswerteeinheit 31 ist über die Eingabeeinheit 314 bedienbar. Das Verb "bedienen" hat die Bedeutung, dass eine menschliche Person über die Eingabeeinheit 314 Befehle eingeben kann, welche Befehle von der Auswerteeinheit 31 ausgeführt werden. Die Eingabeeinheit 314 kann eine Tastatur oder ein berührungsempfindlicher Bildschirm zur Eingabe von Befehlen sein. Über die Eingabeeinheit 314 lassen sich Befehle als Zeichenfolge eingeben und die Auswerteeinheit 31 ist dazu eingerichtet, für eingegebene Befehle Steuerdaten D1, D1' zu erzeugen. So kann der eingegebene Befehl lauten, die Ladungsverstärkereinrichtung 1 einzuschalten oder auszuschalten und die Auswerteeinheit 31 erzeugt für den Befehl Steuerdaten D1, D1'.

### Bezugszeichenliste

- 1: Ladungsverstärkereinrichtung
- 2, 2': piezoelektrischer Sensor
- 3, 3': Auswerteeinrichtung
- 10: Gehäuse
- 11, 11': elektrische Durchführung
- 12, 12': Ladungsverstärkereinheit
- 13: elektrische Spannungsversorgungseinheit
- 14, 14': elektrische Ladekontakte
- 15: Steuereinheit
- 16: drahtlose Kommunikationseinheit
- 20, 20': Sensorgehäuse
- 21, 21': piezoelektrisches Element
- 22, 22': Signalelektrode
- 23, 23': Masseelektrode
- 24, 24': Sensorkabel
- 30: räumliche Beabstandung
- 31: Auswerteeinheit
- 36: weitere drahtlose Kommunikationseinheit
- 100: Inneres des Gehäuses
- 101, 101': Signalleitung
- 102: Datenleitung
- 121, 121': Operationsverstärker
- 122, 122': erster Kondensator
- 123, 123': zweiter Kondensator
- 124, 124': Reset-Schaltelement
- 125: Messkette
- 151: Analog-/Digital-Wandler
- 152: Datenspeicher
- 153: Datenprozessor
- 200: Messort
- 300: Auswerteort
- 301: weitere Datenleitung
- 312: weiterer Datenspeicher
- 313: weiterer Datenprozessor
- 314: Eingabeeinheit
- 315: Ausgabeeinheit
- i-, i-': invertierender Eingang des Operationsverstärkers
- i+, i+': nichtinvertierender Eingang des Operationsverstärkers
- A: Auswerteprogramm
- CS: Ladestatus
- C122, C122': erste Kapazität
- C123, C123': zweite Kapazität
- Δ, Δ': Messfehler
- D, D': Messdaten
- D1, D1': Steuerdaten
- D2: Statusdaten
- D3: Verbindungsdaten
- DR: Datenübertragungsrate
- F, F': Verstärkungsfaktor
- FS, FS': Endwert des Messbereichs
- i, i': Signaleingang der Steuereinheit
- i": Dateneingang der drahtlosen Kommunikationseinheit
- KD: Korrekturdaten
- l, l': Länge des Sensorkabels
- L: Sendeleistung
- o, o': Signalausgang des Operationsverstärkers
- o": Datenausgang der Steuereinheit
- M, M': physikalische Messgrösse
- Q, Q': elektrische Ladungen
- R, R': Messbereich
- R1, R1': unterer Grenzwert des Messbereichs
- R2, R2': oberer Grenzwert des Messbereichs
- R3: unterer Ladegrenzwert
- S: Steuerprogramm
- S1, S1': Steuersignal
- S2: Alarmsignal
- SE, SE': Empfindlichkeit des piezoelektrischen Sensors
- τ122, τ123: erste Zeitkonstante
- τ122', τ123': zweite Zeitkonstante
- t: Zeitdauer
- T: Temperatur
- U, U': verstärkte elektrische Spannung

## Patentansprüche

1. Ladungsverstärkereinrichtung (1) für mindestens einen piezoelektrischen Sensor (2, 2'), welcher unter der Wirkung einer zu messenden physikalischen Messgrösse (M, M') elektrische Ladungen (Q, Q') erzeugt, und welcher über ein Sensorkabel (24, 24') mit der Ladungsverstärkereinrichtung (1) elektrisch verbindbar ist; welche Ladungsverstärkereinrichtung (1) ein Gehäuse (10) aufweist, in welchem mindestens eine Ladungsverstärkereinheit (12, 12'), eine Steuereinheit (15), eine elektrische Spannungsversorgungseinheit (13) und eine drahtlose Kommunikationseinheit (16) angeordnet sind; wobei der piezoelektrische Sensor (2, 2') im mit der Ladungsverstärkereinrichtung (1) elektrisch verbundenen Zustand über das Sensorkabel (24, 24') elektrische Ladungen (Q, Q') an die Ladungsverstärkereinheit (12, 12') ableitet; welche Ladungsverstärkereinheit (12, 12') dazu eingerichtet ist, abgeleitete elektrische Ladungen (Q, Q') in eine elektrische Spannung (U, U') zu verstärken; **dadurch gekennzeichnet, dass** die Ladungsverstärkereinheit (12, 12') einen Operationsverstärker (121, 121') und mindestens einen Kondensator (122, 123, 122', 123') aufweist; welcher Operationsverstärker (121, 121') einen invertierenden Eingang (i-, i-') und einen Signalausgang (o, o') aufweist, welcher invertierende Eingang (i-, i-') einen elektrischen Eingangswiderstand (Ri, Ri' aufweist, welcher Kondensator (122, 123, 122', 123') parallel zum invertierenden Eingang (i-, i-') und zum Signalausgang (o, o') geschaltet ist, welcher Kondensator (122, 123, 122', 123') eine Kapazität (C122, C123, C122', C123') und einen elektrischen Isolationswiderstand (R122, R123, R122', R123') aufweist; und dass die Ladungsverstärkereinheit (12, 12') eine Zeitkonstante (τ122, τ123, τ122', τ123') von grösser/gleich 10³ s, vorzugsweise grösser/gleich 5*10³ s aufweist.

2. Ladungsverstärkereinrichtung (1) nach Anspruch 1, **dadurch gekennzeichnet, dass** sich die Zeitkonstante (τ122, τ123, τ122', τ123') aus dem Produkt der Parallelschaltung des elektrischen Eingangswiderstandes (Ri, Ri') und des elektrischen Isolationswiderstandes (R122, R123, R122', R123') mit der Kapazität (C122, C123, C122', C123') die Zeitkonstante (τ122, τ123, τ122', τ123') ergibt.

3. Ladungsverstärkereinrichtung (1) nach einem der Ansprüche 1 oder 2, **dadurch gekennzeichnet, dass** die Ladungsverstärkereinheit (12, 12') dazu eingerichtet ist, die physikalische Messgrösse (M, M') über eine Zeitdauer (t), welche in erster Näherung gleich dem Produkt aus Messfehler (Δ, Δ') und Zeitkonstante (τ122, τ123, τ122', τ123') ist, quasistatisch zu messen; und dass die Messung der physikalischen Messgrösse (M, M') für einen Messfehler (Δ, Δ') kleiner/gleich 2 % hochgenau ist.

4. Ladungsverstärkereinrichtung (1) nach einem der Ansprüche 1 bis 3, **dadurch gekennzeichnet, dass** die Ladungsverstärkereinheit (12, 12') ein Reset-Schaltelement (124, 124') aufweist, welches parallel zum Kondensator (122, 123, 122', 123') geschaltet ist; und dass die Ladungsverstärkereinheit (12, 12')dazu eingerichtet ist, durch Schliessen des Reset-Schaltelementes (124, 124') den invertierenden Eingang (i-, i-') und den Kondensator (122, 123, 122', 123') zu Beginn einer Messung der physikalischen Messgrösse (M, M') zu entladen.

5. Ladungsverstärkereinrichtung (1) nach einem der Ansprüche 1 bis 4, **dadurch gekennzeichnet, dass** die Steuereinheit (15) einen Analog-/Digital-Wandler (151) aufweist; dass die Ladungsverstärkereinheit (12, 12') über mindestens eine Signalleitung (101, 101') mit der Steuereinheit (15) elektrisch verbunden ist; dass die verstärkte elektrische Spannung (U, U') über die Signalleitung (101, 101') zur Steuereinheit (15) gelangt; und dass der Analog-/DigitalWandler (151) die verstärkte elektrische Spannung (U, U') in digitale Messdaten (D, D') wandelt.

6. Ladungsverstärkereinrichtung (1) nach Anspruch 5, **dadurch gekennzeichnet, dass** die Steuereinheit (15) mindestens einen Datenspeicher (152), mindestens einen Datenprozessor (153) und mindestens ein Steuerprogramm (S) aufweist, welches Steuerprogramm (S) im Datenspeicher (152) gespeichert und in den Datenprozessor (153) ladbar ist; dass das in den Datenprozessor (153) geladene Steuerprogramm (S) die Messdaten (D, D') komprimiert und/oder dass das in den Datenprozessor (153) geladene Steuerprogramm (S) die Messdaten (D, D') korrigiert; dass die Steuereinheit (15) über eine Datenleitung (102) mit der drahtlose Kommunikationseinheit (16) elektrisch verbunden ist; dass die Messdaten (D, D') über die Datenleitung (102) zur drahtlosen Kommunikationseinheit (16) gelangen; und dass die drahtlose Kommunikationseinheit (16) Messdaten (D, D') drahtlos überträgt.

7. Ladungsverstärkereinrichtung (1) nach Anspruch 6, **dadurch gekennzeichnet, dass** das in den Datenprozessor (153) geladene Steuerprogramm (S) mindestens eine der folgenden Statusdaten (D2) bildet: Statusdaten (D2) über einen aktuellen Ladestatus (CS) der elektrischen Spannungsversorgungseinheit (13), Statusdaten (D2) über einen aktuell eingestellten Messbereich (R, R') der Ladungsverstärkereinheit (12, 12') und Statusdaten (D2) über eine Empfindlichkeit (SE, SE') des piezoelektrischen Sensors (2, 2'); dass die Steuereinheit (15) über eine Datenleitung (102) mit der drahtlose Kommunikationseinheit (16) elektrisch verbunden ist; dass die Statusdaten (D2) über die Datenleitung (102) zur drahtlosen Kommunikationseinheit (16) gelangen; und dass die drahtlose Kommunikationseinheit (16) Statusdaten (D2) drahtlos überträgt.

8. Ladungsverstärkereinrichtung (1) nach einem der Ansprüche 6 oder 7, **dadurch gekennzeichnet, dass** die drahtlose Datenübertragung der Messdaten (D, D') mit einer Sendeleistung (L) im Bereich von 0.1 mW bis 10 mW erfolgt.

9. Ladungsverstärkereinrichtung (1) nach einem der Ansprüche 6 bis 8, **dadurch gekennzeichnet, dass** eine Datenübertragungsrate (DR) der drahtlosen Datenübertragung der Messdaten (D, D') einstellbar ist.

10. Ladungsverstärkereinrichtung (1) nach einem der Ansprüche 6 bis 9, **dadurch gekennzeichnet, dass** die drahtlose Datenübertragung der Messdaten (D, D') in Echtzeit erfolgt.

11. Ladungsverstärkereinrichtung (1) nach einem der Ansprüche 1 bis 10, **dadurch gekennzeichnet, dass** das Gehäuse (10) das Innere (100) staubdicht gegenüber dem Eindringen von Staub mit einem Partikeldurchmesser von kleiner 1.0 mm schützt und dass das Gehäuse (10) das Innere (100) wasserdicht gegenüber dem Eindringen von Wasser beim dauerhaften Untertauchen über eine Tiefe von mehr als 1 m schützt.

12. Ladungsverstärkereinrichtung (1) nach einem der Ansprüche 1 bis 11, **dadurch gekennzeichnet, dass** das Gehäuse (10) eine elektrische Durchführung (11, 11') aufweist; dass das Sensorkabel (24, 24') mit der elektrischen Durchführung (11, 11') elektrisch verbindbar ist; dass die elektrische Durchführung (11, 11') im mit dem Sensorkabel (24, 24') elektrisch verbundenen Zustand der Ladungsverstärkereinrichtung (1), vom Sensorkabel (24, 24') elektrisch abgeleitete elektrische Ladungen (Q, Q') in das Innere (100) zur Ladungsverstärkereinheit (12, 12') elektrisch weiterleitet; und dass die elektrische Durchführung (11, 11') im Betrieb der Ladungsverstärkereinrichtung (1) das einzige kabelgestützte Verbindungsmittel der Ladungsverstärkereinrichtung (1) ist.

13. Messkette (123), welche mindestens einen piezoelektrischen Sensor (2, 2'), ein Sensorkabel (24, 24'), eine Ladungsverstärkereinrichtung (1) und eine Auswerteeinrichtung (3) aufweist; wobei der piezoelektrische Sensor (2, 2'), das Sensorkabel (24, 24') und die Ladungsverstärkereinrichtung (1) an einem Messort (200) angeordnet sind; welcher piezoelektrische Sensor (2, 2') unter der Wirkung einer zu messenden physikalischen Messgrösse (M, M') elektrische Ladungen (Q, Q') erzeugt und über das Sensorkabel (24, 24') mit der Ladungsverstärkereinrichtung (1) elektrisch verbunden ist und über das Sensorkabel (24, 24') elektrische Ladungen (Q, Q') an die Ladungsverstärkereinheit (12, 12') ableitet; welche Ladungsverstärkereinrichtung (1) ein Gehäuse (10) aufweist, in welchem mindestens eine Ladungsverstärkereinheit (12, 12'), eine Steuereinheit (15), eine elektrische Spannungsversorgungseinheit (13), und eine drahtlose Kommunikationseinheit (16) angeordnet sind; welche Ladungsverstärkereinheit (12, 12') dazu eingerichtet ist, abgeleitete elektrische Ladungen (Q, Q') in eine elektrische Spannung (U, U') zu verstärken; welche Steuereinheit (15) dazu eingerichtet ist, die verstärkte elektrische Spannung (U, U') in Messdaten (D, D') zu wandeln; **dadurch gekennzeichnet, dass** die Ladungsverstärkereinheit (12, 12') einen Operationsverstärker (121, 121') und mindestens einen Kondensator (122, 123, 122', 123') aufweist, welcher Operationsverstärker (121, 121') einen invertierenden Eingang (i-, i-') und einen Signalausgang (o, o') aufweist; welcher invertierende Eingang (i-, i-') einen elektrischen Eingangswiderstand (Ri, Ri') aufweist; welcher Kondensator (122, 123, 122', 123') parallel zum invertierenden Eingang (i-, i-') und zum Signalausgang (o, o') geschaltet ist; welcher Kondensator (122, 123, 122', 123') eine Kapazität (C122, C123, C122', C123') und einen elektrischen Isolationswiderstand (R122, R123, R122', R123') aufweist; dass die Ladungsverstärkereinheit (12, 12') eine Zeitkonstante (τ122, τ123, τ122', τ123') von grösser/gleich 10³ s, vorzugsweise grösser/gleich 5*10³ s aufweist; dass die Auswerteeinrichtung (3) an einem Auswerteort (300) angeordnet ist; dass der Auswerteort (300) in einer räumlichen Beabstandung (30) zum Messort (200) liegt; dass die Auswerteeinrichtung (3) eine weitere drahtlose Kommunikationseinheit (36) aufweist; und dass die drahtlose Kommunikationseinheit (16) und die weitere drahtlose Kommunikationseinheit (36) dazu eingerichtet sind, die drahtlose Datenübertragung der Messdaten (D, D') über die räumliche Beabstandung (30) hinweg durchzuführen.

14. Messkette (123) nach Anspruch 13, **dadurch gekennzeichnet, dass** die Auswerteeinrichtung (3) eine Auswerteeinheit (31) mit mindestens einem weiteren Datenspeicher (312), mindestens einem weiteren Datenprozessor (313) und mindestens einem Auswerteprogramm (A) aufweist, welches Auswerteprogramm (A) im weiteren Datenspeicher (312) gespeichert und in den weiteren Datenprozessor (313) ladbar ist; dass die weitere drahtlose Kommunikationseinheit (36) über eine weitere Datenleitung (301) mit der Auswerteeinheit (31) elektrisch verbunden ist; dass die Messdaten (D, D') über die weitere Datenleitung (301) zur Auswerteeinheit (31) gelangen; und dass das in den weiteren Datenprozessor (313) geladene Auswerteprogramm (A) die Messdaten (D, D') auswertet und/oder dass das in den weiteren Datenprozessor (313) geladene Auswerteprogramm (A) die Messdaten (D, D') korrigiert.

15. Messkette (123) nach Anspruch 14, **dadurch gekennzeichnet, dass** die Steuereinheit (15) Statusdaten (D2) über den Status des piezoelektrischen Sensors (2, 2') und der Ladungsverstärkereinrichtung (1) bildet; dass die drahtlose Kommunikationseinheit (16) und die weitere drahtlose Kommunikationseinheit (36) dazu eingerichtet sind, die drahtlose Datenübertragung der Statusdaten (D2) über die räumliche Beabstandung (30) hinweg durchzuführen; dass die Statusdaten (D2) über die weitere Datenleitung (301) zur Auswerteeinheit (31) gelangen; und dass das in den weiteren Datenprozessor (313) geladene Auswerteprogramm (A) die Statusdaten (D2) auswertet.

16. Messkette (123) nach einem der Ansprüche 14 oder 15, **dadurch gekennzeichnet, dass** das in den weiteren Datenprozessor (313) geladene Auswerteprogramm (A) Steuerdaten (D1, D1') erzeugt; dass die drahtlose Kommunikationseinheit (16) und die weitere drahtlose Kommunikationseinheit (36) dazu eingerichtet sind, die drahtlose Datenübertragung der Steuerdaten (D1, D1') über die räumliche Beabstandung (30) hinweg durchzuführen; dass die drahtlose Kommunikationseinheit (16) über eine Datenleitung (102) mit der Steuereinheit (15) elektrisch verbunden ist; dass die Steuerdaten (D1, D1') über die Datenleitung (102) zur Steuereinheit (15) gelangen; dass die Steuereinheit (15) mindestens einen Datenspeicher (152), mindestens einen Datenprozessor (153) und mindestens ein Steuerprogramm (S) aufweist, welches Steuerprogramm (S) im Datenspeicher (152) gespeichert und in den Datenprozessor (153) ladbar ist; dass das in den Datenprozessor (153) geladene Steuerprogramm (S) für die Steuerdaten (D1, D1') Steuersignale (S1, S1') zur Ansteuerung der Ladungsverstärkereinrichtung (1) erzeugt.
